(19) Europäisches Patentamt
European Patent Office
Office européen des brevets

(11) EP 0 767 927 B1

(12) EUROPÄISCHE PATENTSCHRIFT

(45) Veröffentlichungstag und Bekanntmachung des Hinweises auf die Patenterteilung:
**02.09.1998 Patentblatt 1998/36**

(21) Anmeldenummer: **95924250.4**

(22) Anmeldetag: **16.06.1995**

(51) Int Cl.6: **G02F 1/35**, C09B 23/06, C09B 23/04, C09B 69/10

(86) Internationale Anmeldenummer:
**PCT/EP95/02328**

(87) Internationale Veröffentlichungsnummer:
**WO 96/00409 (04.01.1996 Gazette 1996/02)**

(54) **METHIN- UND AZOMETHINFARBSTOFFE AUF BASIS VON NAPHTHOCHINONEN IN DER NICHTLINEAREN OPTIK**

USE OF METHINE AND AZOMETHINE DYES BASED ON NAPHTHOQUINONES IN NON-LINEAR OPTICS

COLORANTS METHINES ET AZOMETHINES A BASE DE NAPHTOQUINONES UTILISES EN OPTIQUE NON LINEAIRE

(84) Benannte Vertragsstaaten:
**AT BE CH DE DK ES FR GB GR IE IT LI NL PT SE**

(30) Priorität: **27.06.1994 DE 4422333**

(43) Veröffentlichungstag der Anmeldung:
**16.04.1997 Patentblatt 1997/16**

(73) Patentinhaber: **BASF AKTIENGESELLSCHAFT
67056 Ludwigshafen (DE)**

(72) Erfinder:
- **BECKMANN, Stefan
D-67098 Bad Dürkheim (DE)**
- **ETZBACH, Karl-Heinz
D-67227 Frankenthal (DE)**
- **SENS, Rüdiger
D-68165 Mannheim (DE)**

(56) Entgegenhaltungen:
**EP-A- 0 572 898**
**WO-A-90/09616**
- **JOURNAL OF THE CHEMICAL SOCIETY, PERKIN TRANSACTIONS 1, 1988 LETCHWORTH GB, Seiten 2439-2442, Y.KUBO ET AL 'Novel Syntheses of Naphthoquinone Methide Near-infrared Dyes' in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die Verwendung von Methin- oder Azamethinfarbstoffen auf Basis von Naphthochinonen in der nichtlinearen Optik sowie neue Methinfarbstoffe.

Die nichtlinear optischen Eigenschaften organischer Verbindungen finden in vielen Bereichen der Optoelektronik Anwendung. Beispiele dafür sind Anwendungen in der Frequenzverdoppelung, in Phasenmodulatoren, optischen Verstärkern, Interferometern, optischen Schaltern oder in der Nachrichtentechnik.

Es ist allgemein bekannt, daß organische Materialien, insbesondere Polymere mit speziellen Chromophoren nichtlinear optische Eigenschaften aufweisen können, welche zum Teil größer sind als die vergleichbarer anorganischer Materialien.

Die gegenwärtig am häufigsten angewandten Materialien sind anorganische Kristalle, z.B. aus Kaliumdihydrogenphosphat oder Lithiumniobat. Diese Kristalle sind aufwendig und mit hohen Kosten herzustellen sowie aufgrund ihrer starren Struktur nur schwierig in optischen Geräten anzuwenden. Ein weiterer Nachteil sind ihre geringen nichtlinearen Effekte.

Ein besonderer Vorteil geeigneter organischer Chromophore und ihrer Anwendung in polymeren Materialien liegt in ihrer einfachen Herstellung und Verarbeitung.

Die in der nichtlinearen Optik angewandten Chromophore werden in der Regel entweder in kristalliner oder polymergebundener Form angewandt.

Aus der DE-A-3 904 797 sowie der EP-A-312 856 und EP-A 572 898 ist die Anwendung von Farbstoffen in polymeren nichtlinear optischen Systemen bekannt.

Aufgabe der vorliegenden Erfindung war es nun, geeignete Methin- oder Azamethinfarbstoffe auf Basis von Naphthochinonen bereitzustellen, die sich vorteilhaft für die Anwendung in polymeren nichtlinear optischen Systemen eignen. Insbesondere sollten solche Farbstoffe große Hyperpolarisierbarkeitswerte, eine gute thermische Stabilität, gute Verträglichkeit mit den in nichtlinear optischen Systemen zur Anwendung kommenden Polymeren sowie gute Filmbildungseigenschaften mit Copolymeren aufweisen.

Es wurde nun gefunden, daß sich Naphthalinderivaten der Formel I

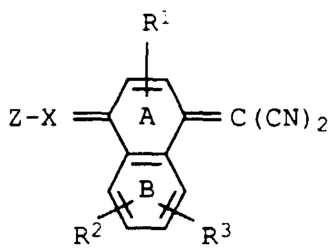

(I),

in der
die Ringe A und B jeweils benzoanelliert sein können,

X Stickstoff oder einen Rest der Formel CH oder CH=CH-CH,

Z einen 5- oder 6-gliedrigen aromatischen heterocyclischen Rest und, für den Fall, daß X eine CH=CH-CH-Gruppe bedeutet, auch einen 5- oder 6-gliedrigen aromatischen carbocyclischen Rest und

$R^1$, $R^2$ und $R^3$ unabhängig voneinander jeweils Wasserstoff, $C_1$-$C_4$-Alkyl oder $C_5$-$C_7$-Cycloalkyl

bedeuten,
vorteilhaft zur Anwendung in der nichtlinearen Optik eignen.

Reste Z in Formel I können sich z.B. von Komponenten aus der Benzol-, Thiophen-, Thiazol-, Oxdiazol- oder Thiadiazolreihe ableiten.

Besonders geeignete Reste Z sind z.B. solche der Formeln IIIa bis IIIf

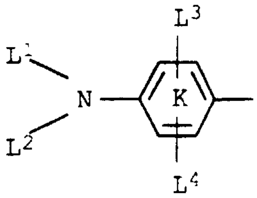 , 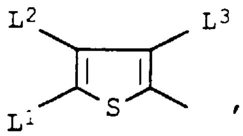 , 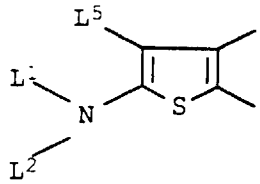 ,

(IIIa) (IIIb) (IIIc)

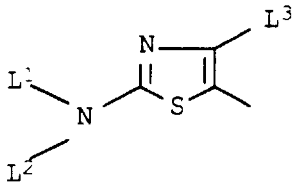 , 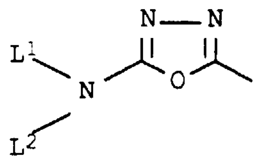 oder 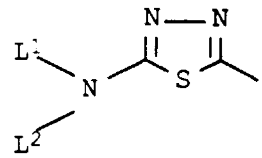 ,

(IIId) (IIIe) (IIIf)

worin
der Ring K benzoanelliert sein kann,

$L^1$ und $L^2$ unabhängig voneinander jeweils für Wasserstoff, $C_1$-$C_{10}$-Alkyl, das gegebenenfalls durch Phenyl, Hydroxy, Acryloyloxy oder Methacryloyloxy substituiert ist, oder Phenyl oder $L^1$ und $L^2$ zusammen mit dem sie verbindenden Stickstoffatom für Pyrrolidinyl, Piperidinyl, Morpholinyl, Piperazinyl oder N-($C_1$-$C_4$-Alkyl)piperazinyl,

$L^3$ und $L^4$ unabhängig voneinander jeweils für Wasserstoff, $C_1$-$C_{10}$-Alkyl, $C_5$-$C_7$-Cycloalkyl, $C_1$-$C_{10}$-Alkoxy, Cyano oder Halogen und

$L^5$ für Wasserstoff, $C_1$-$C_{10}$-Alkyl, das gegebenenfalls durch Phenyl, Hydroxy, Acryloyloxy oder Methacryloyloxy substituiert ist, $C_5$-$C_7$-Cycloalkyl, Phenyl, $C_1$-$C_{10}$-Alkoxy, Cyano, Nitro oder Halogen stehen.

Alle in den obengenannten Formeln auftretenden Alkylgruppen können sowohl geradkettig als auch verzweigt sein.

Wenn in den obengenannten Formeln substituierte Alkylgruppen auftreten, weisen diese in der Regel 1 oder 2 Substituenten auf.

Reste $L^1$, $L^2$, $L^3$, $L^4$, $L^5$, $R^1$, $R^2$ und $R^3$ sind z.B. Methyl, Ethyl, Propyl, Isopropyl, Butyl, Isobutyl, sec-Butyl oder tert-Butyl.

Reste $L^1$, $L^2$, $L^3$, $L^4$ und $L^5$ sind weiterhin z.B. Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl oder Isodecyl (die obigen Bezeichnungen Isooctyl, Isononyl und Isodecyl sind Trivialbezeichnungen und stammen von den nach der Oxosynthese erhaltenen Alkoholen - vgl. dazu Ullmann's Encyclopedia of Industrial Chemistry, 5th Edition, Vol. A1, Seiten 240 bis 293, sowie Vol. A10, Seiten 284 bis 285).

Reste $L^3$, $L^4$, $L^5$, $R^1$, $R^2$ und $R^3$ sind weiterhin z.B. Cyclopentyl, Cyclohexyl oder Cycloheptyl.

Reste $L^3$, $L^4$ und $L^5$ sind weiterhin z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy, 2-Methylpentyloxy, Heptyloxy, Octyloxy, 2-Ethylhexyloxy, Isooctyloxy, Nonyloxy, Isononyloxy, Decyloxy, Isodecyloxy, Fluor, Chlor, Brom oder Iod.

Reste $L^1$, $L^2$ und $L^5$ sind weiterhin z.B. Benzyl, 1- oder 2-Phenylethyl, 2-Hydroxyethyl, 2-Hydroxypropyl, 3-Hydroxypropyl, 2-Hydroxybutyl, 4-Hydroxybutyl, 5-Hydroxypentyl, 6-Hydroxyhexyl, 7-Hydroxyheptyl, 8-Hydroxyoctyl, 9-Hydroxynonyl, 10-Hydroxydecyl, 2-Acryloyloxyethyl, 2-Methacryloyloxyethyl, 2- oder 3-Acryloyloxypropyl, 2- oder 3-Methacryloyloxypropyl, 2- oder 4-Acryloyloxybutyl, 2- oder 4-Methacryloyloxybutyl, 5-Acryloyloxypentyl, 5-Methacryloyloxypentyl, 6-Acryloyloxyhexyl, 6-Methacryloyloxyhexyl, 7-Acryloyloxyheptyl, 7-Methacryloyloxyheptyl, 8-Acryloyloxyoctyl, 8-Methacryloyloxyoctyl, 9-Acryloyloxynonyl, 9-Methacryioyloxynonyl, 10-Acryloyloxydecyl oder 10-Methacryloyloxydecyl.

Bevorzugt ist die Verwendung von Naphthalinderivaten der Formel I, in der die Ringe A und B nicht benzoanelliert sind.

Weiterhin bevorzugt ist die Verwendung von Naphthalinderivaten der Formel I, in der $R^1$, $R^2$ und $R^3$ jeweils Wasserstoff bedeuten.

Weiterhin bevorzugt ist die Verwendung von Naphthalinderivaten der Formel I, in der Z sich von einer Komponente aus der Thiophen-, Thiazol-, Oxadiazol- oder Thiadiazolreihe und für den Fall, daß X gleich CH=CH-CH ist, auch von der Benzolreihe ableitet.

Besonders bevorzugt ist die Verwendung von Naphthalinderivaten der Formel I, in der Z sich von einer Komponente aus der Thiophen- oder Thiazolreihe, dabei insbesondere von Resten der Formel IIIb, IIIc oder IIId und, für den Fall, daß X gleich CH=CH-CH ist auch von der Benzolreihe und dabei insbesondere von den Resten der Formel IIIa ableitet.

Die Naphthalinderivate der Formel I sind teilweise bekannt und z.B. in J. Chem. Soc. Perk. Trans. I, Seiten 2439 bis 2442, 1988, beschrieben.

Ein weiterer Gegenstand der vorliegenden Anmeldung sind Naphthalinderivate der Formel II

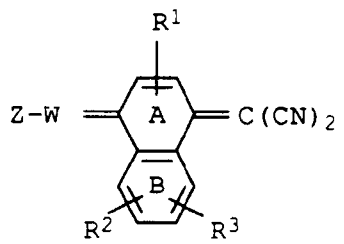

(II),

in der

die Ringe A und B jeweils benzoanelliert sein können,

| | |
|---|---|
| W | einen Rest der Formel CH oder CH=CH-CH und |
| Z | einen 5- oder 6-gliedrigen aromatischen heterocyclischen Rest und, für den Fall, daß W eine CH=CH-CH-Gruppe bedeutet, auch einen 5- oder 6-gliedrigen aromatischen carbocyclischen Rest und |
| $R^1$, $R^2$ und $R^3$ | unabhängig voneinander jeweils Wasserstoff, $C_1$-$C_4$-Alkyl oder $C_5$-$C_7$-Cycloalkyl bedeuten. |

bedeuten.

Bevorzugt sind Naphthalinderivaten der Formel II, in der die Ringe A und B nicht benzoanelliert sind.

Weiterhin sind Naphthalinderivaten der Formel II, in der $R^1$, $R^2$ und $R^3$ jeweils Wasserstoff bedeuten.

Weiterhin bevorzugt sind Naphthalinderivaten der Formel II, in der Z sich von einer Komponente aus der Thiophen-, Thiazol-, Oxadiazol- oder Thiadiazolreihe und, für den Fall, daß W gleich CH=CH-CH ist, auch aus der Benzolreihe ableitet.

Besonders bevorzugt sind Naphthalinderivate der Formel II, in der Z sich von einer Komponente aus der Thiophen- oder Thiazolreihe, dabei insbesondere von Resten der Formel IIIb, IIIc oder IIId und, für den Fall, daß W gleich CH=CH-CH ist, auch von der Benzolreihe und dabei insbesondere von den Resten der Formel IIIa ableitet.

Die Herstellung der Naphthalinderivate der Formel II kann nach an sich bekannten Methoden erfolgen.

Beispielsweise kann man ein Dicyanomethylnaphthalin der Formel IV

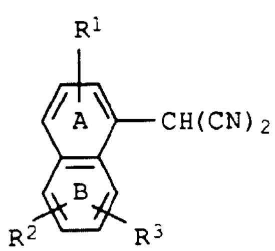

(IV),

in der $R^1$, $R^2$, $R^3$ und die Ringe A und B jeweils die obengenannte Bedeutung besitzen, mit einem Aldehyd der Formel V

$$Z\text{-}(CH{=}CH)_n\text{-}CHO \quad (V),$$

in der Z die obengenannte Bedeutung besitzt und n 0 oder 1 bedeutet, kondensieren.

Die Aldehyde der Formel V sind in der Regel literaturbekannt. Die Herstellung von heterocyclischen Aldehyden dieser Art ist z.B. in der älteren deutschen Patentanmeldung P 44 01 912.2 beschrieben.

Die Naphthalinderivate der Formel I sind über eine Temperatur von 200°C hinaus thermisch stabil und verfügen über besonders große molekulare Hyperpolarisierbarkeitswerte (β). Außerdem weisen die Farbstoffe eine gute Verträglichkeit mit den in nichtlinear optischen Systemen zur Anwendung kommenden Polymeren sowie gute Filmbildungseigenschaften in Copolymeren auf.

Die Bestimmung der molekularen Hyperpolarisierbarkeit kann z.B. nach der Solvatochromiemeßmethode (siehe beispielsweise Z. Naturforschung, Band 20a, Seite 1441 bis 1471, 1965, oder J. Org. Chem., Band 54, Seite 3775 bis 3778, 1989), erfolgen. Man bestimmt dabei die Lage der Absorptionsbande einer Verbindung in verschiedenen Lösungsmitteln, z.B. in Dioxan oder Dimethylsulfoxid. Die Verschiebung der Absorptionsbande ist dann direkt proportional dem β-Wert, d.h. Verbindungen mit großer solvatochromer Verschiebung weisen eine große molekulare Hyperpolarisierbarkeit auf und eignen sich daher gut für die Anwendung in nichtlinear optischen Systemen (siehe beispielsweise Chemistry and Industry, 1. Oktober 1990, Seiten 600 bis 608).

Insbesondere ist hierbei die Eignung der neuen Stoffe in der Nachrichtentechnik, in elektrooptischen Modulatoren (z.B. Mach-Zehnder-Interferometer), in optischen Schaltern, bei der Frequenzmischung oder in Wellenleitern hervorzuheben.

Die folgenden Beispiele sollen die Erfindung näher erläutern.

Beispiel 1

3,50 g (0,02 mol) 4-(Dimethylamino)zimtaldehyd und 3,84 g (0,02 mol) 1-Dicyanomethylnaphthalin wurden in 40 ml Acetanhydrid für 3 h auf 80°C erhitzt. Nach dem Erkalten rührte man für weitere 6 h bei 20°C. Der Rückstand wurde abgesaugt, mit Isopropanol gewaschen und bei 50°C unter vermindertem Druck getrocknet. Man erhielt 2,95 g der Verbindung der Formel

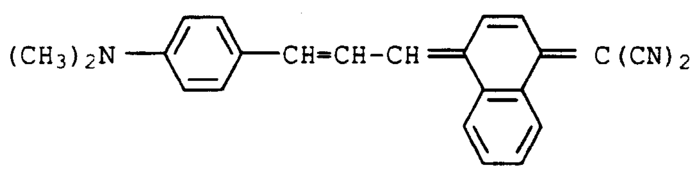

| $C_{24}H_{19}N_3$ (349) | | | |
|---|---|---|---|
| ber | C 82,49 | H 5,48 | N 12,03 |
| gef | C 82,10 | H 5,38 | N 12,05 |

Beispiel 2

1,7 g (0,005 mol) der Verbindung der Formel

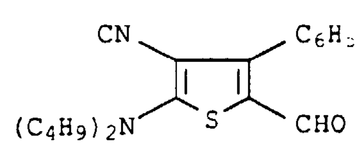

und 0,96 g (0,005 mol) 1-Dicyanomethylnaphthalin wurden in 15 ml Acetanhydrid für 2 h auf 75°C erhitzt. Nach dem Erkalten wurde 12 h bei 20°C gerührt. Den entstandenen Niederschlag saugte man ab, wusch mit wenig Methanol und trocknete unter vermindertem Druck bei 50°C. Man erhielt 0,5 g der Verbindung der Formel

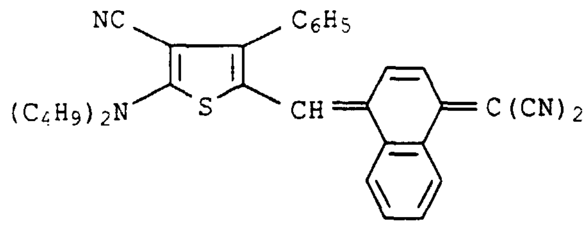

| $C_{33}H_{30}N_4S$ (515) | | | | |
|---|---|---|---|---|
| ber | C 77,01 | H 5,88 | N 10,89 | S 6,23 |
| gef | C 76,84 | H 5,68 | N 10,81 | S 6,10 |

Beispiel 3

3,9 g (0,01 mol) der Verbindung

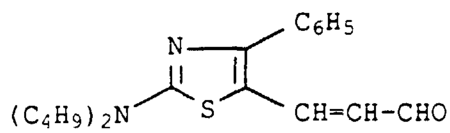

und 1,9 g (0,01 mol) 1-Dicyanomethylnaphthalin wurden in 20 ml Acetanhydrid unter Zugabe von 0,35 g Natriumacetat für 2 h auf 80°C erhitzt. Nach dem Erkalten wurde 12 h bei 20°C gerührt. Der entstandene Niederschlag wurde abgesaugt, mit Isopropanol gewaschen und bei 50°C unter vermindertem Druck getrocknet. Man erhielt 2,59 g der Verbindung der Formel

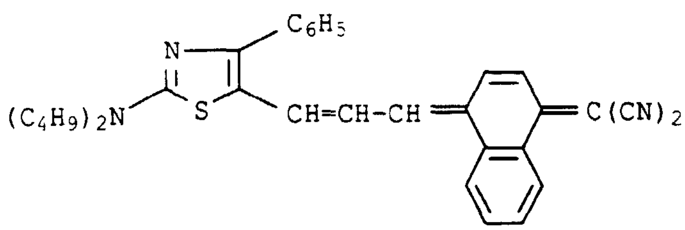

| $C_{33}H_{32}N_4S$ (517) | | | | |
|---|---|---|---|---|
| ber | C 76,71 | H 6,24 | N 10,84 | S 6,21 |
| gef | C 75,70 | H 6,11 | N 10,82 | S 6,26 |

Beispiel 4

3,16 g (0,01 mol) der Verbindung der Formel

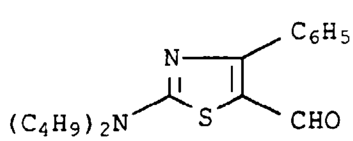

und 1,9 g (0,01 mol) 1-Dicyanomethylnaphthalin wurden in 30 ml Acetanhydrid für 1 h zum Sieden erhitzt. Der entstandene Farbstoff wurde abgesaugt, mit Isopropanol gewaschen und bei 50°C unter vermindertem Druck getrocknet. Man erhielt 3,81 g der Verbindung der Formel

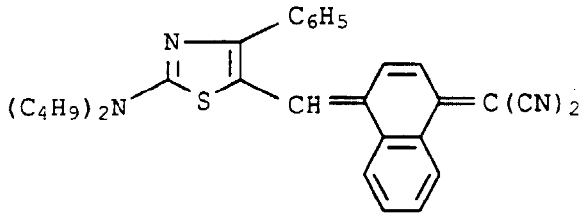

| $C_{31}H_{30}N_4S$ (491) | | | | |
|---|---|---|---|---|
| ber | C 75,88 | H 6,16 | N 11,42 | S 6,53 |
| gef | C 75,69 | H 6,02 | N 11,66 | S 6,48 |

Beispiel 5

1,12 g (0,01 mol) 2-Formylthiophen und 1,9 g (0,01 mol) 1-Dicyanomethylnaphthalin wurden in 30 ml Acetanhydrid 1 h zum Sieden erhitzt. Nach dem Erkalten wurde 12 h bei 20°C nachgerührt. Das entstandene Produkt wurde abgesaugt, mit Isopropanol gewaschen und bei 50°C unter vermindertem Druck getrocknet. Man erhielt 2,2 g der Verbindung der Formel

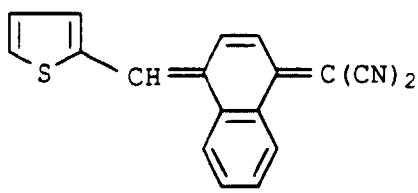

| $C_{18}H_{10}N_2S$ (286) | | | | |
|---|---|---|---|---|
| ber | C 75,50 | H 3,52 | N 9,78 | S 11,20 |
| gef | C 75,48 | H 3,68 | N 10,50 | S 10,20 |

Beispiel 6

1,23 g (0,01 mol) 2-Formyl-5-methylthiophen und 1,9 g (0,01 mol) 1-Dicyanomethylnaphthalin wurden in 30 ml Acetanhydrid 1 h zum Sieden erhitzt. Nach dem Erkalten wurde abgesaugt, mit Isopropanol gewaschen und bei 50°C unter vermindertem Druck getrocknet. Man erhielt 2,0 g der Verbindung der Formel

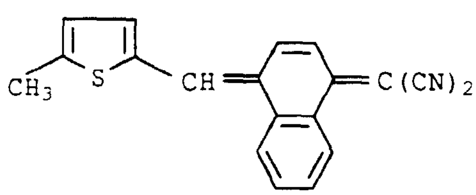

| $C_{19}H_{12}N_2S$ (300) | | | | |
|---|---|---|---|---|
| ber | C 75,97 | H 4,03 | N 9,33 | S 10,67 |
| gef | C 75,80 | H 4,10 | N 9,15 | S 10,42 |

Beispiel 7

2,87 g (0,01 mol) der Verbindung der Formel

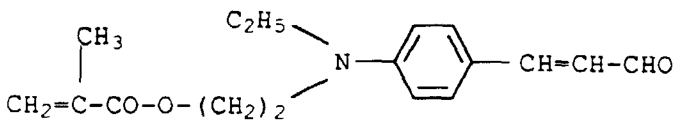

und 1,9 g (0,01 mol) 1-Dicyanomethylnaphthalin wurden in 40 ml Acetanhydrid für 1 h zum Sieden erhitzt. Nach dem Abkühlen rührte man weitere 12 h bei 20°C, saugte den entstandenen Farbstoff ab, wusch mit Isopropanol nach und trocknete das Produkt bei 50°C unter vermindertem Druck. Man erhielt 2,8 g der Verbindung der Formel

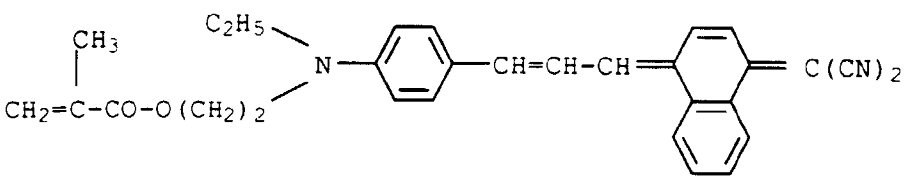

| $C_{30}H_{27}N_2O_2$ (447) | | | |
|---|---|---|---|
| ber | C 83,14 | H 6,24 | N 6,25 |
| gef | C 82,88 | H 6,10 | N 6,18 |

Beispiel 8

3,38 g (0,01 mol) der Verbindung der Formel

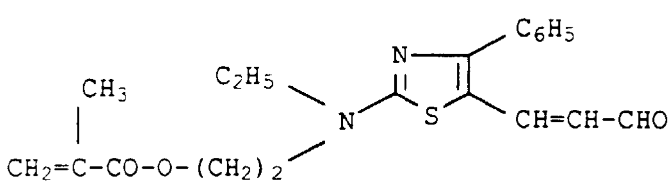

und 1,9 g (0,01 mol) 1-Dicyanomethylnaphthalin wurden durch Erhitzen in Acetanhydrid für 1 h umgesetzt. Danach verfuhr man analog Beispiel 7 und erhielt 3,42 g der Verbindung der Formel

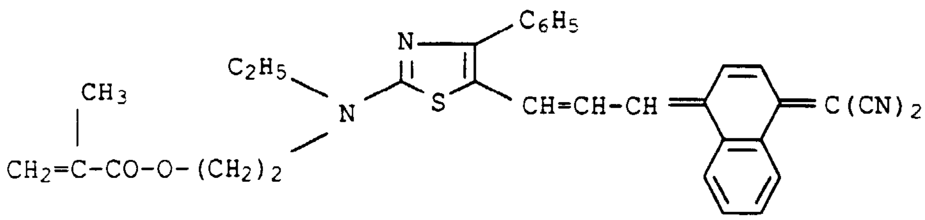

| $C_{33}H_{38}N_4O_2$ (512) | | | |
|---|---|---|---|
| ber | C 77,34 | H 5,47 | N 10,94 |
| gef | C 76,68 | H 5,21 | N 10,33 |

Beispiel 9

3,43 g (0,01 mol) der Verbindung der Formel

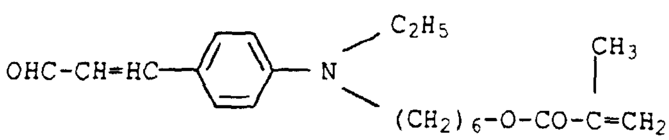

und 1,9 g (0,01 mol) 1-Dicyanomethylnaphthalin wurden durch Erhitzen für 1 h in Acetanhydrid umgesetzt. Danach verfuhr man analog Beispiel 7 und erhielt 3,6 g der Verbindung der Formel

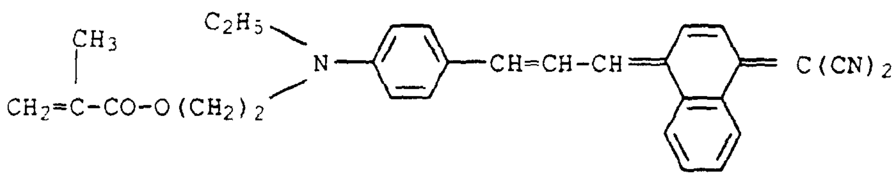

| $C_{34}H_{35}N_2O_2$ (503) | | | |
|---|---|---|---|
| ber | C 81,11 | H 6,96 | N 5,56 |
| gef | C 81,01 | H 6,82 | N 5,70 |

Nach der in Z. Naturforschung, Band 20 a, Seiten 1441 bis 1471, 1965, beschriebenen Methode wurde das Absorptionsmaximum der einzelnen Farbstoffe jeweils in Dioxan und Dimethylsulfoxid (DMSO) gemessen und dann die solvatochrome Verschiebung $\Delta\bar{\nu}$ [$cm^{-1}$] bestimmt.

Die jeweiligen Meßergebnisse sind in der folgenden Tabelle 1 aufgeführt.

Tabelle 1

| Bsp.-Nr. | $\lambda_{max}$ (Dioxan) [nm] | $\lambda_{max}$ (DMSO) [nm] | $\Delta\nu$ [$cm^{-1}$] |
|---|---|---|---|
| 1 | 599 | 691 | 2223 |
| 2 | 614 | 663 | 1204 |
| 3 | 625 | 712 | 1755 |

Tabelle 1 (fortgesetzt)

| Bsp.-Nr. | $\lambda_{max}$ (Dioxan) [nm] | $\lambda_{max}$ (DMSO) [nm] | $\Delta\nu$ [$cm^{-1}$] |
|---|---|---|---|
| 7 | 599 | 690 | 2202 |
| 8 | 623 | 710 | |
| 9 | 593 | 690 | |

Die Eignung der erfindungsgemäßen Farbstoffe in der nichtlinearen Optik ist darüber hinaus durch die Bestimmung der Hyperpolarisierbarkeit ($\beta_0$) des in Beispiel 3 beschriebenen Farbstoffs gezeigt. Die Hyperpolarisierbarkeit wurde durch eine elektrooptische Absorptionsmessung bestimmt. Die vollständige Theorie zu dieser Meßmethode findet sich in Chem. Phys., Band 173, Seiten 305 bis 314, 1993, Chem. Phys., Band 173, Seiten 99 bis 108, 1993, und J. Phys. Chem. Band 96, Seiten 9724 bis 9730, 1992. Von Bedeutung ist neben der Hyperpolarisierbarkeit ($\beta_0$) die für polymere nichtlinear optische Systeme relevante Größe $\mu_g\beta_0$ ($\mu$g = Dipolmoment im Grundzustand), da $\mu g\beta_0$ direkt proportional der Suszeptibilität 2. Ordnung ist. Die gemessenen Werte für $\mu g\beta_o$ sind im Vergleich zu p-Nitroanilin in der folgenden Tabelle 2 aufgeführt.

Tabelle 2

| | $\beta_0$ [$10^{-50}Cm^3V^{-2}$] | $\mu g\beta_0$ [$10^{-80}C^2m^4V^{-2}$] |
|---|---|---|
| Bsp. Nr. 1 | 127 | 4830 |
| p-Nitroanilin | | 95 |

Die relevante Größe $\mu g\beta_0$ ist im erfindungsgemäßen Methinfarbstoff ca. 50 mal so groß wie in der literaturbekannten Verbindung und unterstreicht damit eindrucksvoll die Eignung der neuen Farbstoffe in der nichtlinearen Optik.

**Patentansprüche**

**1.** Verwendung von Naphthalinderivaten der Formel I

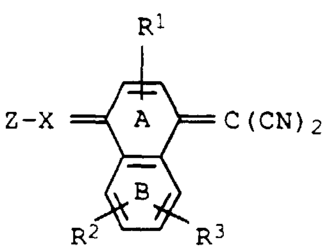

(I),

in der
die Ringe A und B jeweils benzoanelliert sein können,

X — Stickstoff oder einen Rest der Formel CH oder CH=CH-CH,

Z — einen 5- oder 6-gliedrigen aromatischen heterocyclischen Rest und, für den Fall, daß X eine CH=CH-CH-Gruppe bedeutet, auch einen 5- oder 6-gliedrigen aromatischen carbocyclischen Rest und

$R^1$, $R^2$ und $R^3$ — unabhängig voneinander jeweils Wasserstoff, $C_1$-$C_4$-Alkyl oder $C_5$-$C_7$-Cycloalkyl

bedeuten,
in der nicht linearen Optik.

**2.** Verwendung von Naphthalinderivaten nach Anspruch 1, dadurch gekennzeichnet, daß die Ringe A und B nicht benzoanelliert sind.

**3.** Verwendung von Naphthalinderivaten nach Anspruch 1, dadurch gekennzeichnet, daß $R^1$, $R^2$ und $R^3$ jeweils Wasserstoff bedeuten.

**4.** Verwendung von Naphthalinderivaten nach Anspruch 1, dadurch gekennzeichnet, daß Z sich von einer Komponente aus der Thiophen-, Thiazol-, Oxadiazol- oder Thiadiazolreihe ableitet.

**5.** Verwendung von Naphthalinderivaten nach Anspruch 1, dadurch gekennzeichnet, daß Z sich von einer Komponente aus der Benzolreihe ableitet.

**6.** Naphthalinderivate der Formel II

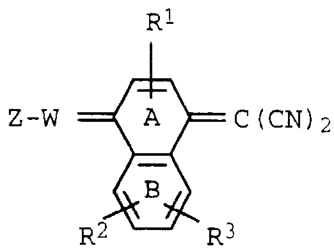

(II),

in der
die Ringe A und B jeweils benzoanelliert sein können,

| | |
|---|---|
| W | einen Rest der Formel CH oder CH=CH-CH und |
| Z | einen 5- oder 6-gliedrigen aromatischen heterocyclischen Rest und, für den Fall, daß W eine CH=CH-CH-Gruppe bedeutet, auch einen 5- oder 6-gliedrigen aromatischen carbocyclischen Rest und |
| $R^1$, $R^2$ und $R^3$ | unabhängig voneinander jeweils Wasserstoff, $C_1$-$C_4$-Alkyl oder $C_5$-$C_7$-Cycloalkyl |

bedeuten.

**7.** Naphthalinderivate nach Anspruch 6, dadurch gekennzeichnet, daß die Ringe A und B nicht benzoanelliert sind.

**8.** Naphthalinderivate nach Anspruch 6, dadurch gekennzeichnet, daß $R^1$, $R^2$ und $R^3$ jeweils Wasserstoff bedeuten.

**9.** Naphthalinderivaten nach Anspruch 6, dadurch gekennzeichnet, daß Z sich von einer Komponente aus der Thiophen-, Thiazol-, Oxadiazol- oder Thiadiazolreihe ableitet.

**10.** Naphthalinderivate nach Anspruch 6, dadurch gekennzeichnet, daß Z sich von einer Komponente aus der Benzolreihe ableitet.

## Claims

**1.** The use of naphthalene derivatives of the formula I

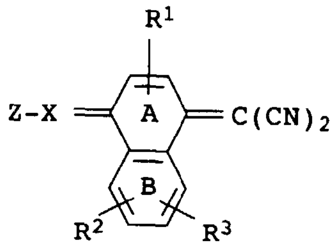

(I)

where
the rings A and B may each be benzofused,

X is nitrogen or a radical of the formula CH or CH=CH-CH,

Z is a 5- or 6-membered aromatic heterocyclic radical or may also be, when X is CH=CH-CH, a 5- or 6-membered aromatic carbocyclic radical, and

$R^1$, $R^2$ and $R^3$ are independently of one another hydrogen, $C_1$-$C_4$-alkyl or $C_5$-$C_7$-cycloalkyl,

in nonlinear optics.

**2.** A use as claimed in claim 1 wherefor the rings A and B are not benzofused.

**3.** A use as claimed in claim 1 wherefor $R^1$, $R^2$ and $R^3$ are each hydrogen.

**4.** A use as claimed in claim 1 wherefor Z is derived from a component of the thiophene, thiazole, oxadiazole or thiadiazole series.

**5.** A use as claimed in claim 1 wherefor Z is derived from a component of the benzene series.

**6.** Naphthalene derivatives of the formula II

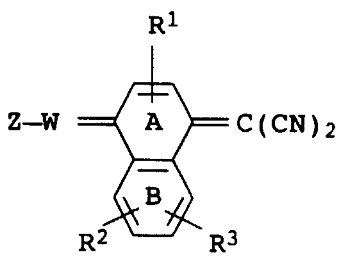

(II)

where
the rings A and B may each be benzofused,

W is a radical of the formula CH or CH=CH-CH,

Z is a 5- or 6-membered aromatic heterocyclic radical or may also be, when W is a CH=CH-CH group, a 5- or 6-membered aromatic carbocyclic radical, and

$R^1$, $R^2$ and $R^3$are independently of one another hydrogen, $C_1$-$C_4$-alkyl or $C_5$-$C_7$-cycloalkyl.

**7.** Naphthalene derivatives as claimed in claim 6 wherein the rings A and B are not benzofused.

**8.** Naphthalene derivatives as claimed in claim 6 wherein $R^1$, $R^2$ and $R^3$ are each hydrogen.

9. Naphthalene derivatives as claimed in claim 6 wherein Z is derived from a component of the thiophene, thiazole, oxadiazole or thiadiazole series.

10. Naphthalene derivatives as claimed in claim 6 wherein Z is derived from a component of the benzene series.

**Revendications**

1. Utilisation de dérivés de naphtalène répondant à la formule I

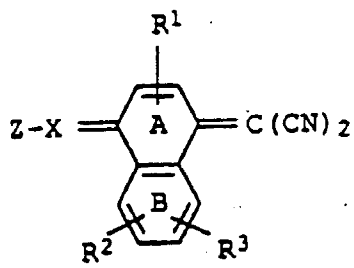

(I),

dans laquelle
les noyaux A et B peuvent être respectivement benzocondensés,

X représente un atome d'azote ou un radical de formule CH ou de formule CH=CH-CH,

Z représente un radical hétérocyclique aromatique à 5 ou à 6 membres et, dans le cas où X représente un groupe CH=CH-CH, représente également un radical carbocyclique aromatique à 5 ou à 6 membres, et

$R^1$, $R^2$ et $R^3$ représentent respectivement, indépendamment l'un de l'autre, un atome d'hydrogène, un groupe alkyle en $C_1$-$C_4$ ou un groupe cycloalkyle en $C_5$-$C_7$,

dans l'optique non linéaire.

2. Utilisation de dérivés de naphtalène selon la revendication 1, caractérisée en ce que les noyaux A et B ne sont pas benzocondensés.

3. Utilisation de dérivés de naphtalène selon la revendication 1, caractérisée en ce que $R^1$, $R^2$ et $R^3$ représentent respectivement un atome d'hydrogène.

4. Utilisation de dérivés de naphtalène selon la revendication 1, caractérisée en ce que Z dérive d'un composant choisi parmi la série comprenant le thiophène, le thiazole, l'oxadiazole ou le thiadiazole.

5. Utilisation de dérivés de naphtalène selon la revendication 1, caractérisée en ce que Z dérive d'un composant choisi parmi la série benzénique.

6. Dérivés de naphtalène de formule II

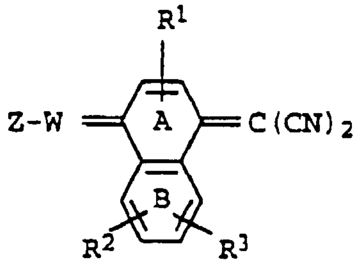

(II),

dans laquelle
les noyaux A et B peuvent être respectivement benzocondensés,

W représente un radical de formule CH ou de formule CH=CH-CH et

Z représente un radical hétérocyclique aromatique à 5 ou à 6 membres et, dans le cas où W représente un groupe CH=CH-CH, représente également un radical carbocyclique aromatique à 5 ou à 6 membres, et

$R^1$, $R^2$ et $R^3$ représentent respectivement, indépendamment l'un de l'autre, un atome d'hydrogène, un groupe alkyle en $C_1$-$C_4$ ou un groupe cycloalkyle en $C_5$-$C_7$.

**7.** Dérivés de naphtalène selon la revendication 6, caractérisés en ce que les noyaux A et B ne sont pas benzocondensés.

**8.** Dérivés de naphtalène selon la revendication 6, caractérisés en ce que $R^1$, $R^2$ et $R^3$ représentent respectivement un atome d'hydrogène.

**9.** Dérivés de naphtalène selon la revendication 6, caractérisés en ce que Z dérive d'un composant choisi parmi la série comprenant le thiophène, le thiazole, l'oxadiazole ou le thiadiazole.

**10.** Dérivés de naphtalène selon la revendication 6, caractérisés en ce que Z dérive d'un composant choisi parmi la série benzénique.